# EUROPÄISCHE PATENTSCHRIFT

(11) **EP 2 170 636 B1**
(45) Veröffentlichungstag und Bekanntmachung des Hinweises auf die Patenterteilung: **29.09.2010**
(21) Anmeldenummer: 08736443.6
(22) Anmeldetag: 22.04.2008
(51) Int. Cl.: B60G 17/0185

(54) **VERFAHREN ZUR FUNKTIONSÜBERPRÜFUNG VON BEWEGUNGSSENSOREN**
METHOD FOR THE FUNCTIONAL TESTING OF MOTION SENSORS
PROCÉDÉ DE CONTRÔLE FONCTIONNEL DE CAPTEURS DE MOUVEMENT

(30) Priorität: 21.06.2007 DE 102007028633
(43) Veröffentlichungstag der Anmeldung: 07.04.2010
(73) Patentinhaber: Continental Aktiengesellschaft, 30165 Hannover (DE)
(72) Erfinder: GROTENDORST, Jörg, 90475 Nürnberg (DE)
(74) Vertreter: Finger, Karsten
(86) Internationale Anmeldenummer: PCT/EP2008/054836
(87) Internationale Veröffentlichungsnummer: WO 2008/155153

(56) Entgegenhaltungen:
- EP-A- 1 227 328
- DE-A1- 10 164 108
- US-A- 5 142 897
- US-A- 5 452 919
- US-A- 5 627 751
- US-A1- 2004 084 858

## Beschreibung

Die Erfindung betrifft ein Verfahren zur Funktionsüberprüfung von in einem Fahrzeug mit aktiv betätigbaren Feder- und Dämpfungselementen angeordneten Bewegungssensoren. Weiterhin betrifft die Erfindung ein Fahrzeug mit einem Steuergerät, welches einen Algorithmus zur verfahrensgemäßen Regelung eines Niveauregelungssystems aufweist.

Solche Prüfungs- oder Kalibrierungsverfahren für Sensoren sind bei Fahrzeugregelungen bekannt, hier insbesondere bei Regelungen der Fahrdynamik. So offenbart die EP 1 227 328 A1 ein Verfahren zur Kalibrierung von Beschleunigungssensoren, bei welchem mit Hilfe einer durch die Sensoren selbst gebildeten, berechneten Referenzebene ein so genannter "offset" ermittelt wird, also ein regelmäßiger Versatz bzw. ein additiver systematischer Fehler in den Signalgrößen, die die Beschleunigungssensoren bei der Fahrzeugbewegung ausgeben. Die Referenzebene wird dabei in eine bekannte berechnete Richtung "bewegt". Nachteiligerweise handelt sich hierbei jedoch um eine indirekte und relativ zur einer berechneten, also nur theoretisch vorhandenen Referenz erfolgende Kalibrierung und nicht um eine Funktionsprüfung von Sensoren mit ausreichendem Bezug zu einer tatsächlichen Karosseriebewegung.

Die DE 101 64 108 A1 offenbart ein Verfahren zur Funktionsprüfung eines in einer Fahrdynamikregelung eingebundenen Querbeschleunigungssensors ohne Probefahrt / Kurvenfahrt, bei dem ein Fahrzeug auf einer Rampe oder mit Hilfe entsprechender Hebevorrichtungen geneigt wird und dann eine rechnerisch durch die geometrischen Verhältnisse ermittelte statische "Querkomponente" der Erdbeschleunigung mit dem vom Sensor angezeigten Signal über eine Diagnosesoftware verglichen wird. Eine Überprüfung von tatsächlich vorhandenen dynamischen Bewegungen des Fahrzeugaufbaus kann hier nicht durchgeführt werden.

Für die Erfindung bestand daher die Aufgabe, ein Verfahren zur Prüfung von Bewegungssensoren, insbesondere von Aufbaubeschleunigungssensoren bereitzustellen, welches ohne das Erfordernis von Probefahrten / Kurvenfahrten auf tatsächliche Fahrzeugbewegungen reagiert und diese durch die Funktionsabfrage der Sensoren abbildet.

Gelöst wird diese Aufgabe durch die Merkmale des Hauptanspruchs. Weitere vorteilhafte Ausbildungen sind in den Unteransprüchen offenbart.

Dabei werden die Feder- und Dämpfungselemente jeder Achse oder jedes Rades so betätigt, dass die Karosserieendbereiche oder die Karosserieecken des Fahrzeuges plötzlichen und ruckartigen Lageänderungen unterworfen und die Signale der dabei auf die Lageänderung reagierenden Bewegungssensoren ermittelt und überprüft werden. Es können damit also im Stand des Fahrzeuges, bei entsprechend geringen Geschwindigkeiten auch während der Fahrt, die entsprechenden Sensoren, also etwa Beschleunigungssensoren an der Karosserie oder auch zwischen Karosserie und Fahrwerk befindliche Lageänderungssensoren / Drehwinkelsensoren durch definierte Karosseriebewegungen direkt in ihrem Signalverhalten überprüft werden. Dies war bisher nur indirekt möglich, nämlich wenn etwa während des Fahrens aufgrund von Fahrbahnanregungen auf Aufbaubewegungen geschlossen werden konnte.

Ein besonders vorteilhafte Ausführung des erfindungsgemäßen Verfahrens besteht bei der Funktionsüberprüfung von Aufbaubeschleunigungssensoren in einem mit einer Luftfederung versehenen Fahrzeug, wobei die Aufbaubeschleunigungssensoren jeweils an den einem Rad zugeordneten Karosserieecken angeordnet sind, darin, dass die Luftfederung mindestens ein Zusatz- oder Speichervolumen aufweist, das mit dem Luftfedervolumen über ein Ventil verbunden werden kann, wobei in einem anfänglichen Zustand Zusatzvolumen und Luftfedervolumen bei geöffnetem Verbindungsventil mit gleichem Druck beaufschlagt werden, danach das Verbindungsventil geschlossen und eines der Volumina in seinem Druck verändert wird, danach das Verbindungsventil schlagartig geöffnet wird und die Signale der Aufbaubeschleunigungssensoren bei der sich durch den plötzlichen Druckausgleich ergebenden Lageänderung ermittelt und überprüft werden. Dabei kann eine schnelle Lageänderung durch das Öffnen eines Ventils sehr einfach und plötzlich erzeugt werden, in dem lediglich ein Druckausgleich zwischen zwei Volumina geschaltet wird, was bei entsprechend dimensionierten Bauteilen "schlagartig" erfolgen kann.

Eine weitere vorteilhafte Ausbildung besteht darin, dass jeweils einer Luftfeder an einem Rad ein separates Zusatzvolumen zugeordnet ist und das Signal des der entsprechenden Karosserieecke zugeordneten Aufbaubeschleunigungssensors bei der sich durch den plötzlichen Druckausgleich ergebenden Lageänderung ermittelt und überprüft wird. Damit lassen sich auf einfache Art die jeweils betroffenen Beschleunigungssensoren einzeln und präzise auf ihre Funktionsweise überprüfen, ohne das die entsprechenden Karosseriebewegungen das Empfinden der Insassen beeinträchtigen.

Je nach Fahr- oder Ausgangszustand, d.h. nach Ausgangsbefüllung der Luftfederung bzw. der Niveauregulierung ergeben sich vier besonders vorteilhafte Ausbildung des Verfahrens, von denen zwei ein plötzlichen Hochspringen der betreffenden Karosserieecke und zwei ein plötzlichen Absinken der betreffenden Karosserieecke bewirken. Eine dieser vorteilhaften Verfahrensausbildungen besteht darin, dass das Luftfedervolumen und das Zusatzvolumen bei geöffnetem Verbindungsventil auf ein hohes Druckniveau aufgepumpt werden, danach das Verbindungsventil geschlossen und der Druck im Luftfedervolumen auf ein Minimum reduziert wird, danach das Verbindungsventil schlagartig geöffnet wird und die Signale des Aufbaubeschleunigungssensors bei dem sich durch den Druckausgleich ergebenden plötzlichen Hochspringen der betreffenden Karosserieecke ermittelt und überprüft wird. Eine zweite dieser vorteilhaften Verfahrensausbildungen besteht darin, dass das Luftfedervolumen und das Zusatzvolumen bei geöffnetem Verbindungsventil auf ein hohes Druckniveau aufgepumpt werden, danach das Verbindungsventil geschlossen und der Druck im Zusatzvolumen auf ein Minimum reduziert wird, danach das Verbindungsventil schlagartig geöffnet wird und die Signale des Aufbaubeschleunigungssensors bei dem sich durch den Druckausgleich ergebenden plötzlichen Absinken der betreffenden Karosserieecke ermittelt und überprüft wird.

Diese vorgenannten beiden vorteilhaften Verfahrensausbildungen bieten sich dann an, wenn dass Luftfedersystem / das Niveauregelungssystem sich auf einem hohen Druckniveau befindet, beispielsweise in der "Gelände-Einstellung".

Eine dritte dieser vorteilhaften Verfahrensausbildungen besteht darin, dass das Luftfedervolumen und das Zusatzvolumen bei geöffnetem Verbindungsventil auf ein minimales Druckniveau abgelassen werden, danach das Verbindungsventil geschlossen und eines der Druck im Luftfedervolumen auf ein Maximum aufgepumpt wird, danach das Verbindungsventil schlagartig geöffnet wird und die Signale des Aufbaubeschleunigungssensors bei dem sich durch den Druckausgleich ergebenden plötzlichen Absinken der betreffenden Karosserieecke ermittelt und überprüft wird. Eine vierte dieser vorteilhaften Verfahrensausbildungen besteht darin, dass das Luftfedervolumen und das Zusatzvolumen bei geöffnetem Verbindungsventil auf ein minimales Druckniveau entlüftet werden, danach das Verbindungsventil geschlossen und eines der Druck im Zusatzvolumen auf ein Maximum aufgepumpt wird, danach das Verbindungsventil schlagartig geöffnet wird und die Signale des Aufbaubeschleunigungssensors bei dem sich durch den Druckausgleich ergebenden plötzlichen Hochspringen der betreffenden Karosserieecke ermittelt und überprüft wird.

Diese vorgenannten vorteilhaften Verfahrensausbildungen bieten sich dann an, wenn dass Luftfedersystem / das Niveauregelungssystem sich auf einem niedrigem Druckniveau befindet, beispielsweise in der "Autobahn-Einstellung".

Eine weitere vorteilhafte Ausbildung besteht darin, dass als die Signale von Beschleunigungssensors für Nick-, Wank- oder Hebebewegungen des Fahrzeuges bei den sich durch den Druckausgleich ergebenden plötzlichen Lageänderungen der betreffenden Karosserieecke ermittelt und überprüft werden. Damit lassen sich mit einer Lageänderung der Karosserie mehrere Sensoren sukzessive oder auch gleichzeitig testen.

Die Erfindung betrifft ebenfalls ein Fahrzeug mit einem Luftfeder- und/oder Dämpfereinheiten aufweisenden Niveauregelungssystem, dadurch gekennzeichnet, dass das Fahrzeug zur Regelung und Steuerung des Niveauregelsystems ein Steuergerät und das Steuergerät einen Algorithmus zur Regelung des Niveauregelungssystems nach dem erfindungsgemäßen Verfahren aufweist.

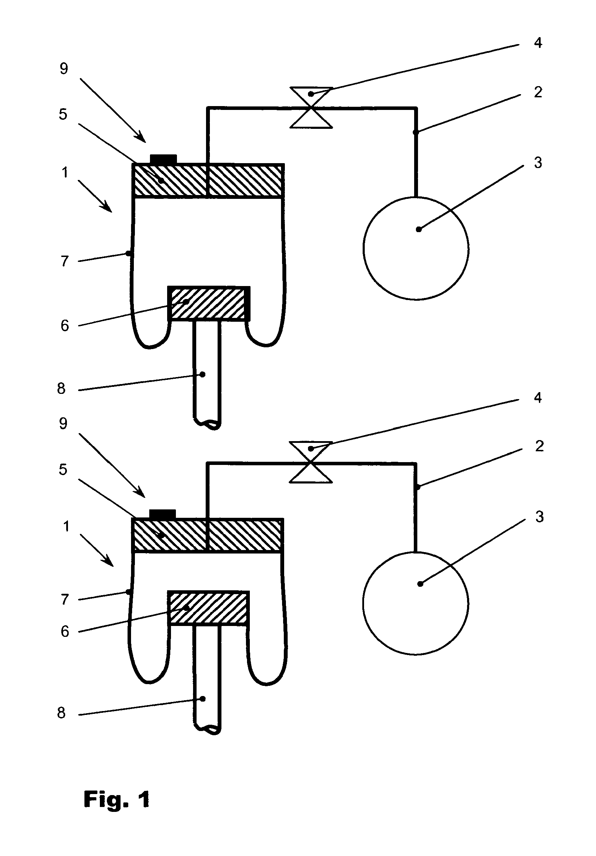

Die Fig. 1 zeigt hierzu eine Prinzipskizze, die das Funktionsprinzip einer Verfahrensausbildung anhand einer Niveauregelanlage verdeutlicht, bei der jeweils einer Luftfeder an einem Rad ein separates Zusatzvolumen zugeordnet ist und das Signal des der entsprechenden Karosserieecke zugeordneten Aufbaubeschleunigungssensors bei der sich durch den plötzlichen Druckausgleich ergebenden Lageänderung ermittelt und überprüft wird.

Dabei erkennt man in der Fig. 1 schematisch eine einem Rad bzw. einer Karosserieecke zugeordnete Luftfeder 1, die über eine Leitung 2 mit einem Zusatzvolumen 3 verbunden ist. In der Leitung 2 befindet sich das Ventil 4. Die Luftfeder 1 besteht in ihren wesentlichen Teilen aus dem mit der hier nicht näher dargestellten Karosserie verbundenen Luftfederdeckel 5, dem mit einem hier ebenfalls nicht näher dargestellten Fahrwerk über die Kolbenstange 8 verbundenen Abrollkolben 6 und dem Rollbalg 7, der an seinem einen Ende am Luftfederdeckel 5 und an seinem anderen Ende am Abrollkolben 6 befestigt ist. Der Rollbalg 7 kann je nach Luftfüllung und Belastung unter Veränderung des Abstandes zwischen Luftfederdeckel und Kolben auf letzterem abrollen.

Näher dargestellt ist hier nun das Verhalten der einem Rad zugeordneten Luftfeder 1 mit Zusatzvolumen 3 bei einer erfindungsgemäßen Verfahrensausbildung, bei der das Luftfedervolumen und das Zusatzvolumen bei geöffnetem Verbindungsventil auf ein hohes, bzw. maximales Druckniveau aufgepumpt werden, danach das Verbindungsventil geschlossen und der Druck im Zusatzvolumen auf ein Minimum reduziert wird und danach wiederum das Verbindungsventil schlagartig geöffnet wird.

Die obere Darstellung der Fig. 1 zeigt dabei den Zustand, in dem sich das Volumen der Luftfeder 1 und das Zusatzvolumen 3 bei geöffnetem Verbindungsventil auf einem maximalen Druckniveau befinden.

Die untere Darstellung der Fig. 1 zeigt den Zustand nach der schlagartigen Öffnung des Verbindungsventils 4, welche nach der ersten Schließung des Verbindungsventils und der Druckreduktion im Zusatzvolumen auf ein Minimum erfolgte. Nachdem also das Verbindungsventil 4 schlagartig geöffnet wird, erfolgt ein plötzliches Absinken der betreffenden Karosserieecke, welches sich durch den durch Druckausgleich zwischen den Volumina der Luftfeder 1 und des Zusatzvolumens 3 verringerten Abstand zwischen Luftfederdeckel 5 und Kolben 6 ergibt.

Bei dem plötzlichen Absinken der betreffenden Karosserieecke werden dann die Signale des dort an der Karosserie befindlichen Aufbaubeschleunigungssensors 9 ermittelt und überprüft.

### Bezugszeichenliste

### (Teil der Beschreibung)

- 1): Luftfeder
- 2): Leitung
- 3): Zusatzvolumen
- 4): Ventil
- 5): Luftfederdeckel
- 6): Abrollkolben
- 7): Rollbalg
- 8): Kolbenstange
- 9): Aufbaubeschleunigungssensor

## Patentansprüche

1. Verfahren zur Funktionsüberprüfung von in einem Fahrzeug mit aktiv betätigbaren Feder- und Dämpfungselementen angeordneten Bewegungssensoren, **dadurch gekennzeichnet, dass** die Feder- und Dämpfungselemente jeder Achse oder jedes Rades so betätigt werden, dass die Karosserieendbereiche oder die Karosserieecken des Fahrzeuges plötzlichen und ruckartigen Lageänderungen unterworfen werden und die Signale der dabei auf die Lageänderung reagierenden Bewegungssensoren ermittelt und überprüft werden.

2. Verfahren nach Anspruch 1 zur Funktionsüberprüfung von Aufbaubeschleunigungssensoren in einem mit einer Luftfederung versehenen Fahrzeug, wobei die Aufbaubeschleunigungssensoren (9) jeweils an den einem Rad zugeordneten Karosserieecken angeordnet sind, **dadurch gekennzeichnet, dass** die Luftfederung mindestens ein Zusatz- oder Speichervolumen (3) aufweist, das mit dem Luftfedervolumen über ein Ventil (4) verbunden werden kann, wobei in einem anfänglichen Zustand Zusatzvolumen (3) und Luftfedervolumen bei geöffnetem Verbindungsventil (4) mit gleichem Druck beaufschlagt werden, danach das Verbindungsventil (4) geschlossen und eines der Volumina in seinem Druck verändert wird, danach das Verbindungsventil (4) schlagartig geöffnet wird und die Signale der Aufbaubeschleunigungssensoren (9) bei der sich durch den plötzlichen Druckausgleich ergebenden Lageänderung ermittelt und überprüft werden.

3. Verfahren nach Anspruch 2, **dadurch gekennzeichnet, dass** jeweils einer Luftfeder (1) an einem Rad ein separates Zusatzvolumen (3) zugeordnet ist und das Signal des der entsprechenden Karosserieecke zugeordneten Aufbaubeschleunigungssensors (9) bei der sich durch den plötzlichen Druckausgleich ergebenden Lageänderung ermittelt und überprüft wird.

4. Verfahren nach Anspruch 2 oder 3, **dadurch gekennzeichnet, dass** das Luftfedervolumen und das Zusatzvolumen (3) bei geöffnetem Verbindungsventil (4) auf ein hohes Druckniveau aufgepumpt werden, danach das Verbindungsventil (4) geschlossen und der Druck im Luftfedervolumen auf ein Minimum reduziert wird, danach das Verbindungsventil (4) schlagartig geöffnet wird und die Signale des Aufbaubeschleunigungssensors (9) bei dem sich durch den Druckausgleich ergebenden plötzlichen Hochspringen der betreffenden Karosserieecke ermittelt und überprüft wird.

5. Verfahren nach Anspruch 2 oder 3, **dadurch gekennzeichnet, dass** das Luftfedervolumen und das Zusatzvolumen (3) bei geöffnetem Verbindungsventil (4) auf ein hohes Druckniveau aufgepumpt werden, danach das Verbindungsventil (4) geschlossen und der Druck im Zusatzvolumen (3) auf ein Minimum reduziert wird, danach das Verbindungsventil (4) schlagartig geöffnet wird und die Signale des Aufbaubeschleunigungssensors (9) bei dem sich durch den Druckausgleich ergebenden plötzlichen Absinken der betreffenden Karosserieecke ermittelt und überprüft wird.

6. Verfahren nach Anspruch 2 oder 3, **dadurch gekennzeichnet, dass** das Luftfedervolumen und das Zusatzvolumen (3) bei geöffnetem Verbindungsventil (4) auf ein minimales Druckniveau abgelassen werden, danach das Verbindungsventil (4) geschlossen und eines der Druck im Luftfedervolumen auf ein Maximum aufgepumpt wird, danach das Verbindungsventil (4) schlagartig geöffnet wird und die Signale des Aufbaubeschleunigungssensors (9) bei dem sich durch den Druckausgleich ergebenden plötzlichen Absinken der betreffenden Karosserieecke ermittelt und überprüft wird.

7. Verfahren nach Anspruch 2 oder 3, **dadurch gekennzeichnet, dass** das Luftfedervolumen und das Zusatzvolumen (3) bei geöffnetem Verbindungsventil (4) auf ein minimales Druckniveau entlüftet werden, danach das Verbindungsventil (4) geschlossen und eines der Druck im Zusatzvolumen (3) auf ein Maximum aufgepumpt wird, danach das Verbindungsventil (4) schlagartig geöffnet wird und die Signale des Aufbaubeschleunigungssensors bei dem sich durch den Druckausgleich ergebenden plötzlichen Hochspringen der betreffenden Karosserieecke ermittelt und überprüft wird.

8. Verfahren nach Anspruch 2 bis 7, **dadurch gekennzeichnet, dass** als die Signale von Beschleunigungssensors für Nick-, Wank- oder Hebebewegungen des Fahrzeuges bei den sich durch den Druckausgleich ergebenden plötzlichen Lageänderungen der betreffenden Karosserieecke ermittelt und überprüft werden.

9. Fahrzeug mit einem Luftfeder- und/oder Dämpfereinheiten aufweisenden Niveauregelungssystem, **dadurch gekennzeichnet, dass** das Fahrzeug zur Regelung und Steuerung des Niveauregelsystems ein Steuergerät und das Steuergerät einen Algorithmus zur Regelung des Niveauregelungssystems gemäß des Verfahren nach Anspruch 2 bis 8 aufweist.

## Claims

1. Method for the functional testing of motion sensors which are arranged in a vehicle with suspension and damping elements which can be actively actuated, **characterized in that** the suspension and damping elements of each axle or of each wheel are actuated in such a way that the end regions or the corners of the vehicle bodywork are subjected to sudden and jolting changes in position and the signals of the motion sensors which react to the change in position here are determined and checked.

2. Method according to Claim 1 for the functional testing of vehicle body acceleration sensors in a vehicle which is provided with pneumatic suspension, wherein the vehicle body acceleration sensors (9) are each arranged at the corners of the vehicle bodywork which are assigned to a wheel, **characterized in that** the pneumatic suspension has at least one additional volume or storage volume (3) which can be connected to the pneumatic suspension volume via a valve (4), wherein in an initial state additional volumes (3) and pneumatic suspension volumes are subjected to the same pressure with the connecting valve (4) opened, then the connecting valve (4) is closed and the pressure of one of the volumes is changed, and then the connecting valve (4) is suddenly opened and the signals of the vehicle body acceleration sensors (9) are determined and checked when there is a change in position resulting from the sudden pressure equalization.

3. Method according to Claim 2, **characterized in that** a separate additional volume (3) is assigned in each case to a pneumatic spring (1) on a wheel, and the signal of the vehicle body acceleration sensor (9) which is assigned to the corresponding corners of the vehicle bodywork is determined and checked when there is a change in position resulting from the sudden pressure equalization.

4. Method according to Claim 2 or 3, **characterized in that** the pneumatic suspension volume and the additional volume (3) are pumped up to a high pressure level with the connecting valve (4) opened, the connecting valve (4) is then closed and the pressure in the pneumatic suspension volume is reduced to a minimum, and then the connecting valve (4) is suddenly opened and the signals of the vehicle body acceleration sensor (9) are determined and checked when the respective corners of the vehicle bodywork suddenly jump up as a result of the pressure equalization.

5. Method according to Claim 2 or 3, **characterized in that** the pneumatic suspension volume and the additional volume (3) are pumped up to a high pressure level with the connecting valve (4) opened, the connecting valve (4) is then closed and the pressure in the additional volume (3) is reduced to a minimum, and then the connecting valve (4) is suddenly opened and the signals of the vehicle body acceleration sensor (9) are determined and checked when the respective corners of the vehicle bodywork suddenly drop as a result of the pressure equalization.

6. Method according to Claim 2 or 3, **characterized in that** the pneumatic suspension volume and the additional volume (3) are discharged to a minimum pressure level with the connecting valve (4) opened, the connecting valve (4) is then closed and the pressure in the air spring volume is pumped up to a maximum, and then the connecting valve (4) is suddenly opened and the signals of the vehicle body acceleration sensor (9) are determined and checked when the respective corners of the vehicle bodywork suddenly drop as a result of the pressure equalization.

7. Method according to Claim 2 or 3, **characterized in that** the pneumatic suspension volume and the additional volume (3) are vented to a minimum pressure level with the connecting valve (4) opened, the connecting valve (4) is then closed and the pressure in the additional volume (3) is pumped up to a maximum, and the connecting valve (4) is then suddenly opened and the signals of the vehicle body acceleration sensor are determined and checked when the respective corners of the vehicle bodywork suddenly jump up as a result of the pressure equalization.

8. Method according to Claims 2 to 7, **characterized in that** the signals of acceleration sensors for pitching movements, rolling movements or reciprocating movements of the vehicle are determined and checked when there are sudden changes in position of the respective corners of the vehicle bodywork as a result of the pressure equalization.

9. Vehicle having a ride level control system having pneumatic suspension units and/or damper units, **characterized in that** the vehicle has a control unit for carrying out closed-loop and open-loop control of the ride level control system, and the control unit has an algorithm for carrying out closed-loop control of the ride level control system in accordance with the method according to Claims 2 to 8.

## Revendications

1. Procédé de vérification du bon fonctionnement de sondes de déplacement disposées dans un véhicule doté d'éléments actifs asservis de suspension et d'amortissement,
**caractérisé en ce que**
les éléments de suspension et d'amortissement de chaque essieu ou de chaque roue sont actionnés de telle sorte que les parties terminales du châssis ou les coins du châssis du véhicule subissent de brusques modifications saccadées de position et
**en ce que** les signaux des sondes de déplacement qui réagissent à cette occasion aux modifications de position sont saisis et vérifiés.

2. Procédé selon la revendication 1 de vérification du bon fonctionnement de sondes d'accélération du châssis d'un véhicule doté d'une suspension pneumatique, dans lequel chaque sonde (9) d'accélération du châssis est disposée sur un coin du châssis associé à une roue respective, **caractérisé en ce que** la suspension pneumatique présente au moins un volume supplémentaire ou de réserve (3) qui peut être relié par une soupape (4) au volume des suspensions pneumatiques, **en ce qu'**une même pression est initialement appliquée sur le volume supplémentaire (3) et sur le volume des suspensions pneumatiques avec la soupape de liaison (4) ouverte, **en ce que** la soupape de liaison (4) est ensuite fermée et la pression d'un des volumes est modifiée, **en ce que** la soupape de liaison (4) est ensuite brusquement ouverte et **en ce que** les signaux délivrés par les sondes (9) d'accélération du châssis à l'occasion de la modification de position qui résulte du brusque équilibrage de pression sont saisis et vérifiés.

3. Procédé selon la revendication 2, **caractérisé en ce qu'**un volume supplémentaire séparé (3) est associé à la suspension pneumatique (1) de chaque roue et **en ce que** le signal délivré par la sonde (9) d'accélération du châssis associée au coin correspondant du châssis à l'occasion de la modification de position qui résulte du brusque équilibrage de pression est saisi et vérifié.

4. Procédé selon les revendications 2 ou 3, **caractérisé en ce que** le volume des suspensions pneumatiques et le volume supplémentaire (3) sont amenés à un niveau plus élevé de pression avec la soupape de liaison (4) ouverte, **en ce que** la soupape de liaison (4) est ensuite fermée et la pression du volume de suspension pneumatique est réduite à un minimum, **en ce que** la soupape de liaison (4) est ensuite ouverte brusquement et **en ce que** les signaux délivrés par la sonde (9) d'accélération du châssis à l'occasion du saut brusque du coin concerné du châssis qui résulte de l'équilibrage de pression sont saisis et vérifiés.

5. Procédé selon les revendications 2 ou 3, **caractérisé en ce que** le volume des suspensions pneumatiques et le volume supplémentaire (3) sont amenés à un niveau élevé de pression avec la soupape de liaison (4) ouverte, **en ce que** la soupape de liaison (4) est ensuite fermée et la pression dans le volume supplémentaire (3) est réduite à un minimum, **en ce que** la soupape de liaison (4) est ensuite ouverte brusquement et **en ce que** les signaux délivrés par la sonde (9) d'accélération du châssis à l'occasion de l'abaissement brusque du coin concerné du châssis qui résulte de l'équilibrage de pression sont saisis et vérifiés.

6. Procédé selon les revendications 2 ou 3, **caractérisé en ce que** le volume de suspension pneumatique et le volume supplémentaire (3) sont amenés à un niveau minimum de pression avec la soupape de liaison (4) ouverte, **en ce qu'**ensuite la soupape de liaison (4) est fermée et la pression dans le volume de suspension pneumatique est amenée à un maximum, **en ce que** la soupape de liaison (4) est ensuite ouverte brusquement et **en ce que** les signaux délivrés par la sonde (9) d'accélération du châssis à l'occasion de l'abaissement brusque du coin concerné du châssis qui résulte de l'équilibrage de pression sont saisis et vérifiés.

7. Procédé selon les revendications 2 ou 3, **caractérisé en ce que** le volume des suspensions pneumatiques et le volume supplémentaire (3) sont vidés de leur air jusqu'à un niveau minimum de pression avec la soupape de liaison (4) ouverte, **en ce qu'**ensuite la soupape de liaison (4) est fermée et la pression dans le volume supplémentaire (3) est amenée à un maximum, **en ce que** la soupape de liaison (4) est ensuite ouverte brusquement et **en ce que** les signaux délivrés par la sonde d'accélération à l'occasion du saut brusque du coin concerné du châssis qui résulte de l'équilibrage de pression sont saisis et vérifiés.

8. Procédé selon les revendications 2 à 7, **caractérisé en ce que** les signaux de la sonde d'accélération qui correspondent à des déplacements de tangage, de roulis ou de relèvement du véhicule à l'occasion des brusques modifications de position du coin concerné du châssis qui résultent de l'équilibrage de pression sont saisis et vérifiés.

9. Véhicule doté d'un système de régulation de niveau qui présente des unités de suspension et/ou d'amortissement pneumatique, **caractérisé en ce que** pour la régulation et le contrôle du système de régulation de niveau, le véhicule présente un appareil de commande, l'appareil de commande présentant un algorithme de régulation du système de régulation de niveau selon le procédé défini dans les revendications 2 à 8.
